**Europäisches Patentamt**

**European Patent Office**

**Office européen des brevets**

(19)

(11) Veröffentlichungsnummer: **0 070 916**
**B 1**

(12) **EUROPÄISCHE PATENTSCHRIFT**

(45) Veröffentlichungstag der Patentschrift:
06.11.85

(21) Anmeldenummer: 81106617.4

(22) Anmeldetag: 26.08.81

(51) Int. Cl.⁴: **B 01 F 5/06,** F 28 F 25/08,
B 01 D 53/18, B 01 D 53/20,
B 01 D 3/24

(54) Einbauelement für eine Vorrichtung mit einem Mantelrohr für Stoff- und direkten Wärmeaustausch und Mischen.

(30) Priorität: 30.07.81 CH 4926/81

(43) Veröffentlichungstag der Anmeldung:
09.02.83 Patentblatt 83/6

(45) Bekanntmachung des Hinweises auf die Patenterteilung:
06.11.85 Patentblatt 85/45

(84) Benannte Vertragsstaaten:
DE FR GB IT NL SE

(56) Entgegenhaltungen:
DE - B - 1 178 404
FR - A - 2 311 578
FR - A - 2 313 113
GB - A - 1 572 665
US - A - 4 034 965

(73) Patentinhaber: GEBRÜDER SULZER
AKTIENGESELLSCHAFT, Zürcherstrasse 9,
CH-8401 Winterthur (CH)

(72) Erfinder: Huber, Max, Dr., Mythenstrasse 38,
CH-8400 Winterthur (CH)

(74) Vertreter: Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)

## Beschreibung

Die Erfindung betrifft eine Vorrichtung zum Stoff- und/oder direkten Wärmeaustausch oder Mischen von mindestens zwei Komponenten, bestehend aus einem Mantelrohr und darin angeordneten Einbauelementen, wobei jedes Einbauelement aus einer Struktur von zur Längsachse des rohrförmigen Gehäuses geneigten Leitflächen besteht, wobei nebeneinanderliegende Leitflächen einen entgegengesetzten Neigungswinkel besitzen und wobei durch eine mittlere Verbindungsbrücke verbundene Leitflächen eine Gruppe bilden, wobei die Leitflächen abwechselnd derart gegeneinander verschwenkt sind, dass die Gruppe ein X-förmiges Profil aufweist, wobei die mittleren Verbindungsbrücken der Gruppen senkrecht zur Rohrachse angeordnet sind.

Derartige Vorrichtungen, wie sie aus der DE-B-2522106 bekannt sind, wurden bis jetzt dazu verwendet, zwei oder mehrere im Gleichstrom fliessende Stoffe homogen zu mischen, d. h. bei jedem Mengen- und Zähigkeitsverhältnis der zu mischenden Komponenten eine hochwertige Mischgüte des Endproduktes über den gesamten Strömungsquerschnitt zu erreichen.

Bei Anwendung der bekannten Einbauelemente in Stoffaustauschkolonnen, insbesondere Rektifizierkolonnen, werden die Einbauelemente im Gegenstrom von den in Stoffaustausch gebrachten Phasen durchsetzt, wobei die Leitflächen als Trägerflächen für die als Film unter dem Einfluss der Schwerkraft herabrieselnde flüssige Phase dienen, mit der die die Lücken der Einbauelemente im Gegenstrom zu dieser flüssigen Phase ausfüllende Gasphase bei Anwendung auf Gas-Flüssigkeitsverfahren oder eine zweite flüssige Phase bei Anwendung auf Extraktionskolonnen in Flächenkontakt gebracht wird.

Die bisher üblichen Herstellungsverfahren für die aus der DE-B-22522106 bekannten Einbauelemente sind äusserst aufwendig, insbesondere im Hinblick auf das breite Spektrum der verschiedenen gewünschten Durchmesser eines Mantelrohres.

Die Einbauelemente bestehen hierbei aus zusammengefügten, ineinander geschobenen Einzelelementen nach Art von «spanischen Reitern» und erfordern für jeden Mantelrohrdurchmessr spezielle Stanzwerkzeuge.

Demgegenüber hat sich die Erfindung eine Struktur eines aus X-förmigen Gruppen bestehenden Einbauelementes für den Einsatz in ein rohrartiges Gehäuse zur Aufgabe gemacht, welche einfach und kostengünstig für jeden gewünschten Durchmesser eines Mantelrohres für einen statischen Mischer, für einen Wärmeaustauscher oder einer Stoffaustauschkolonne hergestellt werden kann.

Diese Aufgabe wird erfindungsgemäss dadurch gelöst, dass mehrere neben- und übereinandergereihte Gruppen im Mantelrohr derart angeordnet sind, dass die Leitflächen endseitig aneinander liegen.

Ein vorteilhaftes Herstellungsverfahren für ein Einbauelement für eine Vorrichtung gemäss der Erfindung besteht darin, dass die Leitflächen einer Gruppe aus einem folienartigen Material durch Stanzen und durch Herausbiegen aus der Ebene der Folie zu einem X-förmigen Profil geformt werden, wobei die Leitflächen mit der die Mittelachse einschliessenden Verbindungsbrücke verbunden bleiben.

Bei Verwendung von Kunststoff kann vorteilhaft eine Gruppe auch durch Spritzgiessen geformt werden.

Die Erfindung wird im folgenden anhand eines in der Zeichnung dargestellten Ausführungsbeispieles erläutert. Hierbei zeigt:

Fig. 1 einen Ausschnitt aus der gestanzten Folie vor dem Ausbiegen;

Fig. 1a eine Einzelgruppe in Seitenansicht und

Fig. 1b eine Seitenansicht von aneinandergereihten Gruppen nach dem Biegen;

Fig. 2 und 3 Ausschnitte aus der gestanzten Folie von Varianten zu Fig. 1, und

Fig. 2a, 2b und 3a, 3b die dazu gehörigen Seitenansichten von Einzelgruppen bzw. von aneinandergereihten Gruppen nach dem Biegen, und

Fig. 4 in perspektivischer Darstellung einen Ausschnitt eines Einbauelementes gemäss den Fig. 1.

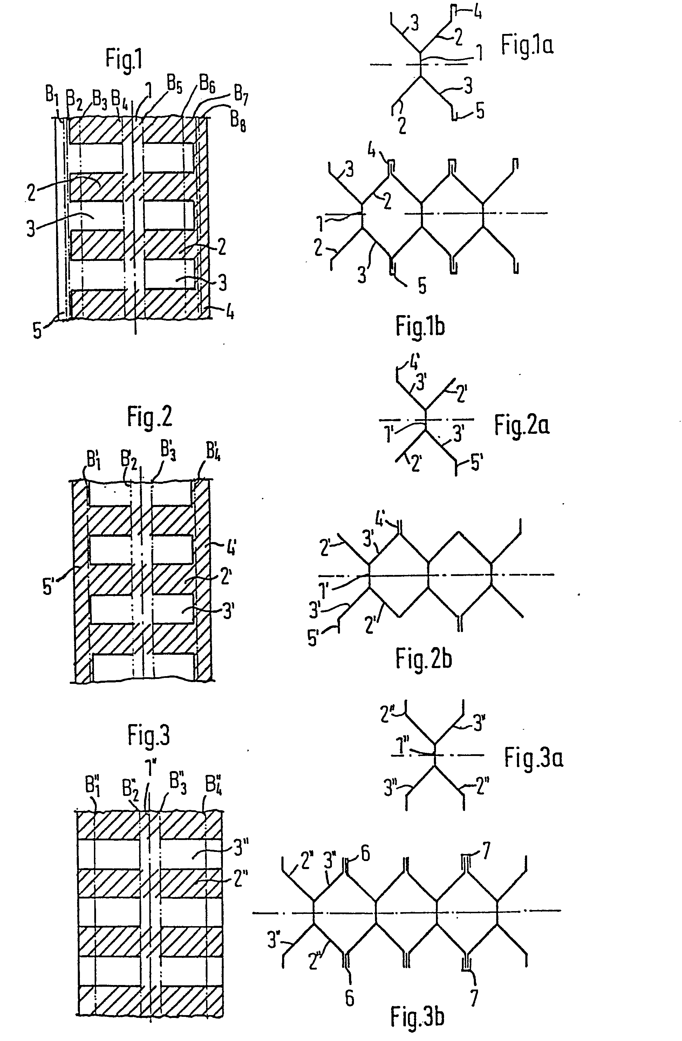

Der in Fig. 1 dargestellte Ausschnitt weist mit einer mittleren Verbindungsbrücke 1 verbundene Leitflächen 2 und 3 auf, die derart ausgestanzt sind, dass die Leitflächen 2 bzw. 3 abwechselnd an einem Ende mit einer Verbindungsbrücke 4 bzw. 5 verbunden sind.

Zur besseren zeichnerischen Erkenntlichkeit sind in den Fig. 1, 2 und 3 die Leitflächen 2, 2', 2" schraffiert dargestellt. Fig. 1a zeigt eine Seitenansicht einer Einzelgruppe.

In Fig. 1b ist eine Seitenansicht für mehrere aneinandergereihte Gruppen dargestellt. Hierbei werden die Leitflächen sodann gegenseitig um einen Winkel von beispielsweise 90° derart verschwenkt, dass die Gruppe in Seitenansicht ein X-förmiges Profil aufweist.

In Fig. 1 sind die Biegelinien $B_1$–$B_8$ eingezeichnet.

Wie aus Fig. 1a und 1b hervorgeht, sind die Verbindungsbrücken 4 bzw. 5 so umgebogen, dass sie die beiden Enden der Leitflächen 3 bzw. 2 der benachbarten Gruppen hakenartig umfassen.

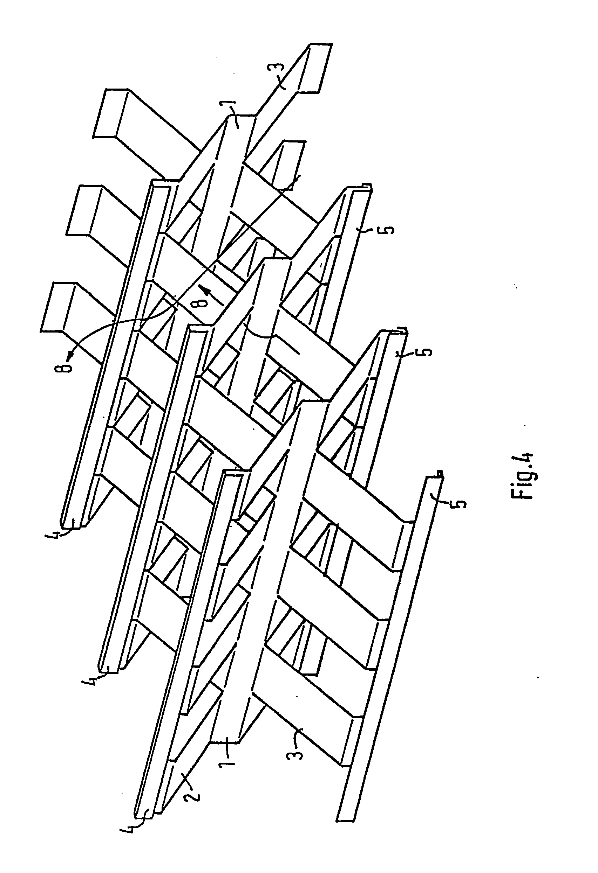

Das aus mehreren aneinandergereihten und übereinander geschichteten Gruppen bestehende Einbauelement wird in einem Mantelrohr derart angeordnet, dass die Längsachse aller Gruppen senkrecht zur Rohrachse liegt (siehe auch Fig. 4).

In analoger Darstellungsweise zu Fig. 1 bis 1b zeigen die Fig. 2 bis 2b und 3 bis 3b eine abgewandelte Ausführungsform der Erfindung.

Der Ausschnitt gemäss Fig. 2 weist mit einer mittleren Verbindungsbrücke 1' verbundene Leitflächen 2' und 3' auf, die derart ausgestanzt sind, dass die Leitflächen 2' nur durch die mittlere Verbindungsbrücke 1' verbunden sind, während die Leitflächen 3' an ihren gegenüberliegenden Enden mit Verbindungsbrücken 4' und 5' verbunden sind, wobei die äusseren Verbindungsbrücken auch verschiedene Breiten aufweisen können. Die

Biegelinien sind mit $B_1' - B_4'$ bezeichnet, wobei die Biegelinien $B_2'$ und $B_3'$ wie in Fig. 1 die Biegelinien $B_4$ und $B_5$ identisch mit den Kanten der mittleren Verbindungsbrücke sind.

Wie Fig. 2b zeigt, sind die äusseren Verbindungsbrücken derart ausgebogen, dass sie bei der Aneinanderreihung von mehreren Gruppen miteinander zur Auflage kommen und z. B. durch Punktschweissung miteinander verbunden werden können.

Die Fig. 3 und 3a und 3b zeigen ebenfalls in analoger Darstellungsweise wie Fig. 1–1b bzw. 2–2b eine dritte Ausführungsform der Erfindung.

Der in Fig. 3 dargestellte Ausschnitt weist mit einer mittleren Verbindungsbrücke 1″ verbundene gestanzte Leitflächen werden ebenso wie in den vorstehend erläuterten Ausführungsbeispielen ausgebogen, so dass jede Gruppe ein X-förmiges Profil aufweist.

Die Enden der Leitflächen sind längs der Biegelinien $B_1''$ und $B_4''$ aufgebogen, so dass beim Aneinanderfügen von mehreren Gruppen – wie Fig. 3b zeigt – die Verbindungen der benachbarten Endstücke durch ein- oder umgelegte Streifen 6 bzw. 7 hergestellt werden, wobei die Endstücke und Streifen ebenfalls beispielsweise durch Punktschweissen miteinander verbunden werden können.

Die Fig. 4 zeigt ein Einbauelement aus drei X-förmigen Profilen der Ausführung nach Fig. 1 in perspektivischer Darstellung, wobei die Enden der Verbindungsstücke aneinandergelegt und durch Umlegen der verlängerten Verbindungsbrücken verbunden werden.

Die Strömungskanäle sind mit der Bezugsziffer 8 bezeichnet.

## Patentansprüche

1. Vorrichtung zum Stoff- und/oder direkten Wärmeaustausch oder Mischen von mindestens zwei Komponenten, bestehend aus einem Mantelrohr und darin angeordneten Einbauelementen, wobei jedes Einbauelement aus einer Struktur von zur Längsachse des Mantelrohres geneigten Leitflächen besteht, wobei nebeneinanderliegende Leitflächen einen entgegengesetzten Neigungswinkel besitzen und wobei durch eine mittlere Verbindungsbrücke (1) verbundene Leitflächen (2, 3) eine Gruppe bilden, wobei die Leitflächen (2, 3) abwechselnd derart gegeneinander verschwenkt sind, dass die Gruppe ein X-förmiges Profil aufweist, wobei die mittleren Verbindungsbrücken der Gruppen senkrecht zur Rohrachse angeordnet sind, dadurch gekennzeichnet, dass mehrere neben- und übereinandergereihte Gruppen im Mantelrohr derart angeordnet sind, dass die Leitflächen der Gruppen endseitig aneinander liegen.

2. Vorrichtung nach Anspruch 1, dadurch gekennzeichnet, dass die Enden der in einer Ebene liegenden Leitflächen (2, 3) durch eine Verbindungsbrücke (4, 5, 6, 7) miteinander verbunden sind.

3. Vorrichtung nach Anspruch 2, dadurch gekennzeichnet, dass die an den Enden der Leitflächen liegenden Verbindungsbrücken für die Verbindung zu einer benachbarten Gruppe dienen.

## Claims

1. A device for the mass transfer and/or direct heat-exchange or mixing of at least two components, consisting of a jacket tube and packing elements disposed therein, each packing element consisting of a structure of guide surfaces inclined to the longitudinal axis of the jacket tube, adjacent guide surfaces having opposite angles of inclination, guide surfaces (2, 3) connected by a central connecting bridge (1) forming a group, the guide surfaces (2, 3) being alternately so offset from one another that the group has an X-shaped profile, the central connecting bridges of the groups being disposed at right angles to the tube axis, characterised in that a plurality of adjacent and superposed groups are do disposed in the jacket tube that the guide surfaces of the groups bear against one another at the end.

2. A device according to claim 1, characterised in that the ends of the coplanar guide surfaces (2, 3) are interconnected by a connecting bridge (4, 5, 6, 7).

3. A device according to claim 2, characterised in that the connecting bridges at the ends of the guide surfaces are used for connection to an adjacent group.

## Revendications

1. Dispositif pour l'échange direct ou le mélange de substances et/ou de chaleur d'au moins deux constituants, formé par un tube gainé et des éléments de montage internes qui y sont disposés, chaque élément de montage se composant d'une structure de surfaces de conduction inclinées par rapport à l'axe longitudinal du tube gainé, des surfaces de conduction situées côte à côte possédant un angle d'inclinaison inverse et les surfaces de conduction (2, 3) reliées par un pont central de liaison (1) formant un groupe dans lequel les surfaces de conduction (2, 3) changent tout à tour de direction l'une par rapport à l'autre, de telle sorte que le groupe présente un profil en forme de X, cependant que les ponts de liaison centraux des groupes sont disposés perpendiculairement à l'axe du tube, caractérisé par le fait que plusieurs groupes accolés ou superposés dans le tube gainé sont disposés de telle sorte que les surfaces de conduction des groupes sont juxtaposées à leurs extrémités.

2. Dispositif selon la revendication 1, caractérisé par le fait que les extrémités des surfaces de conduction (2, 3), se situant dans un plan, sont reliées entre elles par un pont de liaison (4, 5, 6, 7).

3. Dispositif selon la revendication 2, caractérisé par le fait que les ponts de liaison se situant aux extrémités des surface de conduction servent à la liaison avec un groupe voisin.

0070916

Fig.1

Fig.1a

Fig.1b

Fig.2

Fig.2a

Fig.2b

Fig.3

Fig.3a

Fig.3b

5

Fig.4